# EUROPÄISCHE PATENTANMELDUNG

(11) **EP 3 659 891 A1**
(43) Veröffentlichungstag der Anmeldung: **03.06.2020**
(21) Anmeldenummer: 19212477.4
(22) Anmeldetag: 29.11.2019
(51) Int. Cl.: B61B 3/02, B61B 13/00

(54) **INTERMODALES PERSONENVERKEHRSSYSTEM**

(30) Priorität: 29.11.2018 DE 102018220633
(71) Anmelder: TC Consulting GbR, 86637 Zusamaltheim (DE)
(72) Erfinder: JAEGER, Hubert, 86637 Zusamaltheim (DE)
(74) Vertreter: Petermann, Markus Alexander

(57) **Zusammenfassung**

Die Erfindung betrifft ein Intermodales Personenverkehrssystem (1), aufweisend wenigstens eine Personenkabine (2) zur Aufnahme wenigstens eines Fahrgasts, wobei die Personenkabine eine Kabinenschnittstelle (4) aufweist, wenigstens eine erste Antriebsplattform (100) mit einem ersten Verkehrs-modus, aufweisend eine mit der Kabinenschnittstelle (4) korrespondierende erste Plattformschnittstelle (104), wenigstens eine zweite Antriebsplattform (200, 300) mit einem zweiten Verkehrsmodus, aufweisend eine zweite Plattformschnittstelle (204, 304), die der ersten Plattformschnittstelle (104) zumindest im Wesentlichen entspricht, und wenigstens einen Transitknoten (6). Ferner betrifft die Erfindung eine Personenkabine (4) und eine Antriebsplattform (100, 200, 300).

## Beschreibung

Die Erfindung betrifft ein intermodales Personenverkehrssystem mit wenigstens einer Personenkabine und verschiedenen Antriebsplattformen sowie eine Personenkabine und eine Antriebsplattform, jeweils zur Verwendung in einem solchen intermodalen Personenverkehrssystem. Zudem betrifft die Erfindung eine Kabinenschnittstelle und eine Plattformschnittstelle für ein solches intermodales Personenverkehrssystem sowie eine Kopplungseinrichtung zur Verbindung einer Personenkabine und einer Antriebsplattform mittels einer solchen Kabinenschnittstelle und einer solchen Plattformschnittstelle.

Intermodale Verkehrssysteme an sich sind in einfachen Ausführungen beispielsweise aus dem Cargo-Bereich bekannt. Genormte Container können in großer Menge gestapelt auf Container-Schiffen über weite Strecken transportiert und anschließend vereinzelt auf Güterzügen oder Container-LKWs verladen werden.

Bei solchen Verkehrssystemen ist der Lastträger an sich - beispielswiese der Container - ein verhältnismäßig einfaches mechanisches Bauteil, das lediglich die geforderten Lasten aufnehmen und eine geometrisch definierte Schnittstelle aufweisen muss, an welcher der Lastenträger an dem jeweils verwendeten Verkehrsträger festgelegt und gegebenenfalls befestigt werden kann. So werden beispielsweise Container auf Container-Schiffen nebeneinander und übereinander gestapelt, wobei die geometrischen Schnittstellen zur Festlegung ineinandergreifen. Auf Güterzügen bzw. Container-LKWs wird jeweils ein Container an einer entsprechenden Schnittstelle des Waggons oder des LKW-Auflegers befestigt.

Aus dem Patentdokument WO 00/21814 ist ein multifunktionales, automobiles, integrierbares Transport-Kabinenshuttle bekannt. In dem Patentdokument wird das Ziel genannt, eine entsprechende Kabine so zu konstruieren, dass sie sich sowohl frei im Verkehr bewegen kann als auch in Verbindung mit anderen Kabinen und Trägersystemen schnell große Entfernungen zurücklegen kann. Dazu soll die Kabine sowohl für Schienen, Straßen und sonstige Träger- bzw. Leitsysteme erweitert bzw. umgebaut werden. Der in dem Patentdokument vorgeschlagene multifunktionale Automobilapparat soll durch Form und Technik bzw. Normung geeignet sein, Menschen, Materie und Materialien zu befördern. Wie mit dem vorgeschlagenen System allerdings sicher, zeiteffizient und komfortabel Personen transportiert werden sollen, bleibt unklar.

Vor diesem Hintergrund ist es eine Aufgabe der Erfindung, ein verbessertes intermodales Personenverkehrssystem bereitzustellen. Insbesondere ist es eine Aufgabe der Erfindung, eine verbesserte Personenkabine mit einer verbesserten Kabinenschnittstelle und eine verbesserte Antriebsplattform mit einer verbesserten Plattformschnittstelle, und damit eine verbesserte Kopplungseinrichtung zur Verbindung einer Personenkabine und einer Antriebsplattform bereitzustellen.

Diese Aufgabe wird gelöst durch ein intermodales Personenverkehrssystem mit den Merkmalen von Anspruch 1, eine Personenkabine zur Verwendung in einem intermodalen Personenverkehrssystem mit den Merkmalen von Anspruch 6, eine Antriebsplattform zur Verwendung in einem intermodalen Personenverkehrssystem mit den Merkmalen von Anspruch 9, eine Kabinenschnittstelle zur Verwendung an einer Personenkabine mit den Merkmalen von Anspruch 12, eine Plattformschnittstelle zur Verwendung an einer Antriebsplattform mit den Merkmalen von Anspruch 14 sowie eine Kopplungseinrichtung zur Verbindung einer Personenkabine und einer Antriebsplattform mit den Merkmalen von Anspruch 16. Bevorzugte Ausführungen sind jeweils Gegenstand der abhängigen Ansprüche.

Gemäß einem Aspekt der Erfindung wird ein intermodales Personenverkehrssystem bereitgestellt. Das intermodale Personenverkehrssystem weist zumindest auf: a) wenigstens eine Personenkabine zur Aufnahme wenigstens eines, insbesondere mehrerer Fahrgäste, wobei die Personenkabine eine Kabinenschnittstelle aufweist, b) wenigstens eine erste Antriebsplattform mit einem ersten Verkehrsmodus, aufweisend eine mit der Kabinenschnittstelle korrespondierende erste Plattformschnittstelle, c) wenigstens eine zweite Antriebsplattform mit einem zweiten Verkehrsmodus, aufweisend eine mit der Kabinenschnittstelle korrespondierende zweite Plattformschnittstelle, die insbesondere der ersten im Wesentlichen entspricht, zumindest hinsichtlich der Schnittstelleneigenschaften bezüglich einer Verbindung mit der Kabinenschnittstelle, und d) wenigstens einen Transitknoten mit einem Plattformtauscher, der dazu ausgebildet ist, eine Personenkabine, welche an ihrer Kabinenschnittstelle mit der Plattformschnittstelle einer ersten Antriebsplattform verbunden ist, von dieser ersten Antriebsplattform zu trennen und die Personenkabine mit der Plattformschnittstelle einer zweiten Antriebsplattform zu verbinden.

Unter einem intermodalen Personenverkehrssystem ist vorliegend insbesondere ein Verkehrssystem zu verstehen, das mehrere Fahrzeuge (wobei ein Fahrzeug jeweils zumindest eine Personenkabine und eine damit verbundene Antriebsplattform aufweist) und wenigstens zwei verschiedene Verfahr-Infrastrukturen für die Fahrzeuge aufweist. Die Verfahr-Infrastrukturen sind jeweils unterschiedlichen Verkehrsmodi zugeordnet. Beispielsweise ist eine erste Verfahr-Infrastruktur eine Straße und eine zweite Verfahr-Infrastruktur ein Schienenstrang. Die Fahrzeuge weisen vorzugsweise jeweils eine Personenkabine und eine damit während des Verfahrens verbundene Antriebsplattform auf, wobei für unterschiedliche Verfahr-Infrastrukturen bzw. Verkehrsmodi unterschiedliche Antriebsplattformen vorgesehen sein können. Beispielsweise kann die Personenkabine auf einer Straße mit einer Antriebsplattform verbunden sein, die antreibbare Straßenreifen aufweist, und auf einen Schienenstrang mit einer Antriebsplattform verbunden sein, die Schienenräder aufweist.

Unter einem Transitknoten ist vorliegend insbesondere ein Ort zu verstehen, an welchem Verkehrs-Infrastrukturen aufeinandertreffen, die unterschiedlichen Verkehrsmodi zugeordnet sind. Zudem ist an einem Transitknoten insbesondere vorgesehen, dass die Personenkabine von einer Antriebsplattform, die der einen Verfahr-Infrastruktur zugeordnet ist, getrennt wird und mit einer Antriebsplattform, die der anderen Verfahr-Infrastruktur zugeordnet ist, verbunden wird. Dazu kann insbesondere ein Plattformtauscher verwendet werden, der beispielsweise als Hebekran, Hebebühne, Förderband oder in anderer, im Einzelfall sinnvoller Weise ausgebildet sein kann.

Gemäß einem weiteren Aspekt der Erfindung wird eine Personenkabine zur Verwendung in einem intermodalen Personenverkehrssystem, das insbesondere nach einer Ausführung der Erfindung ausgebildet ist, bereitgestellt. Die Personenkabine weist auf: einen Fahrgastraum zum Aufnehmen wenigstens eines, insbesondere mehrerer, Fahrgäste, sowie eine Kabinenschnittstelle nach einer Ausführung der Erfindung zur Verbindung mit einer Plattformschnittstelle einer Antriebsplattform.

Unter einem Fahrgastraum ist vorliegend insbesondere ein Innenraum der Personenkabine zu verstehen, in welchem beispielsweise ein oder mehrere Sitzplätze und/oder ein oder mehrere Stehplätze für zu transportierende Personen angeordnet sind. Insbesondere können im Fahrgastraum insbesondere auch Bedienschnittstellen und/oder Komfortfunktionen für die zu transportierende(n) Person(en) angeordnet sein.

Gemäß einem weiteren Aspekt der Erfindung wird eine Antriebsplattform zur Verwendung in einem intermodalen Personenverkehrssystem, das insbesondere nach einer Ausführung der Erfindung ausgebildet ist, bereitgestellt. Die Antriebsplattform weist zumindest auf: einen Antrieb und ein Fahrwerk zum Transport einer Personenkabine mittels eines bestimmten Verkehrsmodus, sowie eine Plattformschnittstelle nach einer Ausführung der Erfindung zur Verbindung mit einer Kabinenschnittstelle einer Personenkabine.

Unter einem Antrieb der Antriebsplattform kann vorliegend sowohl zu verstehen sein, dass an der Antriebsplattform ein Antriebsmotor angeordnet ist, als auch, dass die Antriebsplattform mittelbar oder unmittelbar mit einem Antriebsmotor verbunden ist. Unter einem Fahrwerk ist vorliegend insbesondere eine Einrichtung zu verstehen, mittels welcher mittelbar oder unmittelbar die Antriebsenergie eines Antriebsmotors in eine Vortriebsbewegung umgesetzt werden kann - wie auch immer das im entsprechenden Verkehrsmodus im Detail ausgeführt ist. Beispielsweise kann bei einer Antriebsplattform für den straßengebundenen Überlandverkehraufweisend einen Verbrennungsmotor - der Antrieb zusätzlich zu dem Verbrennungsmotor ein geeignetes Getriebe sowie die Verteilerwellen zur Übertragung der Vortriebskräfte auf die Räder aufweisen. Das Fahrwerk kann beispielsweise zusätzlich zu den Rädern eine geeignete Radaufhängung und/oder Dämpfungskomponenten aufweisen.

Gemäß einem weiteren Aspekt der Erfindung wird eine Kabinenschnittstelle zur Verwendung an einer Personenkabine, die insbesondere nach einer Ausführung der Erfindung ausgebildet ist, bereitgestellt, wobei die Kabinenschnittstelle insbesondere wenigstens einen, insbesondere größeren, Teil einer Unterseite der Personenkabine einnimmt.

Vorzugsweise ist die Kabinenschnittstelle in der Weise an einer Unterseite der Personenkabine angeordnet, dass die Personenkabine beispielsweise in geeigneter Art und Weise oberhalb einer straßengebundenen Antriebsplattform mit ihrer Kabinenschnittstelle an der Plattformschnittstelle verbunden werden kann. Vorliegend ist insbesondere auch von einer Anordnung der Kabinenschnittstelle an der Unterseite der Personenkabine die Rede, wenn einzelne Schnittstellenkomponenten seitlich an der Personenkabine angeordnet sind.

Gemäß einem weiteren Aspekt der Erfindung wird eine Plattformschnittstelle zur Verwendung an einer Antriebsplattform, die insbesondere nach einer Ausführung der Erfindung ausgebildet ist, bereitgestellt, wobei die Plattformschnittstelle insbesondere wenigstens einen, insbesondere größeren, Teil einer nach oben ausgerichteten Aufnahmeseite, insbesondere einer Oberseite, der jeweiligen Antriebsplattform einnimmt.

Mit der Formulierung "nach oben ausgerichtete Aufnahmeseite der Antriebsplattform" ist insbesondere gemeint, dass die Aufnahmeseite der Antriebsplattform zumindest im Wesentlichen unterhalb der Personenkabine angeordnet ist, wenn die Antriebsplattform und die Personenkabine verbunden sind. Beispielsweise wird eine Ausführung bereitgestellt, bei welcher die Antriebsplattform oberhalb der Personenkabine in einen Schienenstrang oder ein Seilbahnseil eingehängt ist, wobei trotzdem die Plattformschnittstelle (insbesondere an der Aufnahmeseite) unterhalb der Kabinenschnittstelle und damit auch unterhalb der Personenkabine angeordnet ist, wenn die Personenkabine und die Antriebsplattform miteinander verbunden sind.

Gemäß einem weiteren Aspekt der Erfindung wird eine Kopplungseinrichtung zur Verbindung einer Personenkabine und einer Antriebsplattform bereitgestellt, wobei insbesondere sowohl die Personenkabine als auch die Antriebsplattform nach einer Ausführung der Erfindung ausgebildet sind. Die Kopplungseinrichtung weist eine Kabinenschnittstelle nach einer Ausführung der Erfindung und eine Plattformschnittstelle nach einer Ausführung der Erfindung auf. Insbesondere im gekoppelten Zustand (insbesondere der Kabinenschnittstelle und der Plattformschnittstelle) weist die Kopplungseinrichtung zumindest auf: i) eine korrespondierende Schnittstellengeometrie, sodass insbesondere die Ports und die Medienisolierungen der Verbindungshubs ineinandergreifen, und/oder ii) eine korrespondierende Kraftübertragungs-Passform, sodass bei verbundenen Schnittstellen die Personenkabine und die Antriebsplattform in Fahrzeuglängsrichtung, in Fahrzeugquerrichtung und bzgl. einer Rotation um die Fahrzeughochachse zueinander festgelegt sind, und/oder iii) eine korrespondierende Verriegelung, sodass bei verbundenen Schnittstellen die Personenkabine und die Antriebsplattform in Fahrzeughochrichtung und bzgl. einer Rotation um die Fahrzeuglängsachse und um die Fahrzeugquerachse festgelegt sind.

Unter einer Kopplungseinrichtung ist vorliegend insbesondere eine Einrichtung zu verstehen, die eine Kabinenschnittstelle einer Personenkabine und eine korrespondierende Plattformschnittstelle einer Antriebsplattform aufweist. Korrespondierend bedeutet vorliegend insbesondere, dass bestimmte Schnittstellenmerkmale einer Kabinenschnittstelle einerseits und einer Plattformschnittstelle andererseits derart aufeinander abgestimmt sind, dass sie in der vorgesehenen Art und Weise zusammenwirken können. Insofern kann "korrespondierend" beispielsweise bedeuten: geometrisch zusammenpassend und/oder zur Energieübertragung zusammenpassend und/oder zur Datenübertragung zusammenpassend und/oder zur Kraftübertragung zusammenpassend und/oder zur Medienübertragung zusammenpassend. Der Erfindung liegt unter anderem die Erkenntnis zugrunde, dass bei der gegenwärtigen Organisation der Verkehrsströme in hochentwickelten Gesellschaften der motorisierte Individualverkehr und der öffentliche Personennahverkehr nicht optimal aufeinander abgestimmt sind. So sieht beispielsweise eine typische Pendelstrecke für einen Arbeitspendler häufig folgendermaßen aus: Der Pendler verlässt das Haus und fährt mit seinem Auto zum nächstliegenden Bahnhof. Dort verliert er Zeit, während er das Auto abstellt und zum Bahnsteig läuft. Er wartet anschließend auf den Zug, der nach einem starren Fahrplanschema abfährt. Nach der Abfahrt des Zuges fährt der Pendler zum Hauptbahnhof der Stadt, in welcher er arbeitet. Anschließend verliert er wiederum Zeit, indem er zur Bushaltestelle derjenigen Buslinie geht, die ihn zu seiner Arbeitsstelle bringt. Zur der vorgesehenen fixen Abfahrtszeit fährt der entsprechende Bus ab. Von der Ankunftshaltestelle zum Firmensitz des Arbeitsgebers muss der Pendler wiederum gehen.

Die Erfindung basiert nun unter anderem auf der Idee, Individualverkehr und öffentlichen Personennahverkehr in einem intermodalen Personenverkehrssystem zu vereinen. Indem der Insasse einer Personenkabine die Personenkabine nicht mehr verlassen muss, um den Verkehrsmodus zu wechseln, können die oben beschriebenen Zeitverluste minimiert werden. Im oben beschriebenen Beispiel des Berufspendlers könnte das beispielsweise bedeuten: Der Pendler hat ein Fahrzeug des intermodalen Personenverkehrssystems für eine bestimmte Zeit bestellt. Zu diesem Zeitpunkt kommt eine Personenkabine auf einer elektrisch betriebenen, straßenbasierten Antriebsplattform an. Der Pendler steigt ein und wird vollautonom zu einem ersten Transitknoten am Ortsrand gefahren, wo die Personenkabine mittels eines Plattformtauschers (beispielsweise Hebekran) auf eine zweite Antriebsplattform mit einem Verbrennungsmotor überführt wird. Auf dieser zweiten Antriebsplattform kann die Strecke zur Stadt des Arbeitgebers über Land ebenso vollautonom bei deutlich höherer Geschwindigkeit (und Reichweite) gefahren werden. Am Stadtrand des Arbeitsgebersitzes wird an einem weiteren Transitknoten die Personenkabine wieder auf eine elektrisch getriebene Antriebsplattform überführt, die anschließend die Personenkabine bis vor das Werkstor fährt. Alternativ wäre die Überlandpassage auch in einem schienengebundenen Verkehrsmodus denkbar, wobei dann die Transitknoten die Personenkabine jeweils auf eine/von einer anderen Antriebsplattform überführen, die einen Schienenantrieb aufweisen.

Um einen reibungslosen Wechsel zwischen verschiedenen Verkehrsmodi zu ermöglichen, weist gemäß einer Ausführung wenigstens ein Transitknoten einen Moduswechsler auf, der ausgebildet ist, ein Fahrzeug, insbesondere eine Personenkabine mit, insbesondere auf, einer ersten Antriebsplattform, aus einem Verkehrsfluss im ersten Verkehrsmodus zu entkoppeln und ein, insbesondere das, Fahrzeug, insbesondere eine Personenkabine mit, insbesondere auf, einer zweiten Antriebsplattform, in einen Verkehrsfluss im zweiten Verkehrsmodus einzukoppeln.

Bei einem straßengebundenen Verkehrsmodus kann der Moduswechsler beispielsweise eine Zubringerstraße sein und/oder eine Verzögerungs- und/oder Beschleunigungsspur aufweisen; bei einem schienengebundenen Verkehrsmodus kann der Moduswechsler beispielsweise ein Zubringergleis sein und/oder ein Verzögerungs- und/oder Beschleunigungsgleis aufweisen.

Um einen vollautomatischen und/oder vollautonomen Betrieb des intermodalen Personenverkehrssystems zu erleichtern, sind gemäß einer Ausführung die Antriebsplattformen für einen vollautonomen Fahrbetrieb eingerichtet und ausgebildet. Unter einen vollautonomen Fahrbetrieb ist vorliegend insbesondere zu verstehen, dass die Antriebsplattformen, gegebenenfalls in Verbindung mit einer Personenkabine, dafür geeignet sind, sich führerlos und unfallfrei zielgerichtet im jeweils vorgesehenen Verkehrsmodus zu bewegen, insbesondere unter Nutzung der zu dem Verkehrsmodus gehörigen Verfahr-Infrastruktur.

Damit das intermodale Personenverkehrssystem flächendeckend eingesetzt werden kann, weist es gemäß einer Ausführung eine Vielzahl von Personenkabinen, jeweils eine Vielzahl von Antriebsplattformen mit unterschiedlichen Verkehrsmodi und mehrere, insbesondere eine Vielzahl von, Transitknoten auf. Die Transitknoten sind insbesondere auf die beteiligten Verkehrsmodi abgestimmt.

Um ein umfassendes Personenverkehrssystem für landgebundene Verkehrsmodi bereitzustellen, ist gemäß einer Ausführung wenigstens eine Antriebsplattform mit einem straßenbasierten Verkehrsmodus und wenigstens eine Antriebsplattform mit einem schienenbasierten Verkehrsmodus vorgesehen. Insbesondere sind dann die Transitknoten auf eine Überführung der Personenkabinen zwischen straßengebundenen und schienengebundenen Antriebsplattformen abgestimmt.

Gemäß einer Ausführung weist der Fahrgastraum der Personenkabine eine Fahrgast-Bedienschnittstelle zum Absetzen eines Notrufs und/oder zum Treffen von Verkehrsentscheidungen und/oder zum Öffnen einer Fahrgastraumtüre und/oder zum Bedienen von Komfortfunktionen aufweist. Mittels der Fahrgast-Bedienschnittstelle, die beispielsweise mit einem Touchscreen und/oder mit einer kabelgebundenen und/oder funknetzbasierten Kommunikationsschnittstelle ausgebildet sein kann, können insbesondere verschiedenste Eingriffe eines Fahrgasts in den Betrieb des Personenverkehrssystems, und insbesondere der Personenkabine, vorgesehen sein. Neben der Notruffunktion kann beispielsweise auch allgemeine Kommunikationsfunktionalität vorgesehen sein. Verkehrsentscheidungen kann der Fahrgast beispielsweise zur Auflösung unerwarteter Situationen im Straßenverkehr (wie beispielsweise eine Straßensperrung oder ein Hindernis auf der Straße) treffen. Es kann aber auch vorgesehen sein, dass der Fahrgast unterwegs einen geänderten Fahrzielwunsch eingeben kann. Damit kann ein sicherer und/oder komfortabler Betrieb des intermodalen Personenverkehrssystems in vielfacher Hinsicht sichergestellt werden.

Gemäß einer Ausführung weist der Fahrgastraum wenigstens eine Komfortfunktion wie Klimatisierung/Heizung, Infotainment oder eine Mobilfunkverbindung auf, die beispielsweise mittels der Fahrgast-Bedienschnittstelle bedienbar ist. So kann ein für den Fahrgast angenehmes Reiseerlebnis sichergestellt werden.

In einem intermodalen Personenverkehrssystem werden je nach vorgesehenen Verkehrsmodi ganz unterschiedliche Antriebsplattformen bereitgestellt. Als Verkehrsmodi können einer, mehrere oder alle nachfolgend genannten Verkehrsmodi vorgesehen sein, wobei insbesondere für jeden der Verkehrsmodi wenigstens einem, insbesondere mehrere, auf den jeweiligen Verkehrsmodus angepasste Antriebsplattformen vorgesehen sind. Als Verkehrsmodus kann vorgesehen sein: 1) Straßenverkehr auf Basis eines Antriebs mit einer Verbrennungskraftmaschine zum Antrieb von Straßenrädern und einem Brennstofftank, und/oder 2) Straßenverkehr auf Basis eines Antriebs mit wenigstens einer elektrischen Maschine zum Antrieb von Straßenrädern und einem elektrischen Energiespeicher, und/oder 3) Straßenverkehr auf Basis eines Antriebs mit wenigstens einer elektrischen Maschine zum Antrieb von Straßenrädern und einem elektrischen Energiespeicher sowie einem kraftstoffgetriebenen Range Extender, und/oder 4) Schienenverkehr auf Basis eines Antriebs mit wenigstens einer elektrischen Maschine zum Antrieb von Schienenrädern, und/oder 5) Schienenverkehr auf Basis eines Magnetschwebeverkehr zum Antrieb von Linearstatoren, und/oder 6) Schienenverkehr auf Basis eines Zugseil-Antriebs, und/oder 7) Seilbahnverkehr auf Basis eines Zugseil-Antriebs, und/oder 8) Magnetschwebeverkehr auf Basis eines magnetelektrischen Schwebeantriebs, und/oder 9) jeder weitere, dem Fachmann sinnvoll erscheinende Verkehrsmodus.

Um einen vollautonomen Betrieb des intermodalen Personenverkehrssystems sicherzustellen, benötigen die Antriebsplattformen eine geeignete Infrastruktur für den vollautonomen Fahrbetrieb oder müssen zumindest mittelbar auf eine solche Infrastruktur zugreifen können. Dazu ist gemäß einer Ausführung vorgesehen, dass die jeweilige Antriebsplattform eine Steuereinheit und wenigstens einen Sensor, insbesondere ein Sensorpaket, aufweist, wobei die Steuereinheit im Zusammenwirken mit dem Sensor, insbesondere mit dem Sensorpaket, dem Antrieb und dem Fahrwerk eingerichtet ist, die Antriebsplattform in ihrem Verkehrsmodus vollautonom, und insbesondere zielgerichtet hin zum gewünschten Fahrtziel, zu bewegen. Insbesondere weist die Antriebsplattform zur Sicherstellung des vollautonomen Fahrbetriebs die dafür benötigten Sensoren, insbesondere in einem Sensorpaket, und eine Steuereinheit, die dazu eingerichtet ist, auf Basis der mittels der Zensoren erfassten Sensorwerten den jeweiligen Antrieb und damit gegebenenfalls auch das jeweilige Fahrwerk geeignet anzusteuern.

Die Kabinenschnittstelle der Personenkabinen in jedem Verkehrsmodus mit der entsprechenden Plattformschnittstelle der unterschiedlichen Antriebsplattform verbinden zu können, müssen diese korrespondierende Schnittstellen aufweisen.

Gemäß einer Ausführung ist dazu vorgesehen, dass die Kabinenschnittstelle aufweist: i) eine Schnittstellengeometrie mit einer Kraftübertragungs-Passform, wobei die Kraftübertragungs-Passform wenigstens eine, insbesondere zwei voneinander beabstandete, Querwände und/oder wenigstens zwei voneinander beanstandete Längswände aufweist, und/oder ii) eine an der Schnittstellengeometrie angeordnete Verriegelung, die vorzugsweise wenigstens eine Verriegelungsausnehmung aufweist, und/oder iii) einen an der Schnittstellengeometrie angeordneten Verbindungshub mit wenigstens einem Daten-Port, wenigstens einem Energie-Port und einer Medienisolierung, die den Hub und/oder wenigstens einen der Ports gegenüber der restlichen Schnittstellengeometrie abgrenzt.

Gemäß einer Ausführung ist dazu vorgesehen, dass die Plattformschnittstelle aufweist: I) eine Schnittstellengeometrie mit einer, insbesondere mit einer Kraftübertragungs-Passform einer Kabinenschnittstelle korrespondierende Kraftübertragungs-Passform, wobei die Kraftübertragungs-Passform wenigstens eine, insbesondere zwei voneinander beabstandete Querwände und/oder wenigstens zwei voneinander beanstandete Längswände aufweist, und/oder II) eine an der Schnittstellengeometrie angeordnete Verriegelung, die vorzugsweise wenigstens einen Riegel aufweist, und/oder III) einen an der Schnittstellengeometrie angeordneten Verbindungshub mit wenigstens einem Daten-Port, wenigstens einem Energie-Port und/oder einer Medienisolierung, die den Hub gegenüber der restlichen Schnittstellengeometrie abgrenzt, und/oder IV) eine Schnittstellenheizung, die ausgebildet ist, eine Vereisung der Plattformschnittstelle oder einzelner Komponenten zu verhindern und/oder abzutauen und/oder eine Vereisung Kabinenschnittstelle oder einzelnen Komponenten zu verhindern und/oder abzutauen.

Unter einer Kraftübertragungs-Passform ist vorliegend insbesondere eine zueinander korrespondierenden ausgebildete Außenkontur der Kabinenschnittstelle und der Plattformschnittstelle zu verstehen, die insbesondere so ausgebildet ist, dass bei (beispielsweise formschlüssig und/oder reibschlüssig) verbundenen Schnittstellen sichergestellt ist, dass aus dem Fahrbetrieb der Antriebsplattformen auftretende Kräfte in Fahrzeuglängsrichtung und/oder in Fahrzeugquerrichtung von der Außenkontur der Plattformschnittstelle auf die Außenkontur Kabinenschnittstelle übertragen werden. So kann hinsichtlich der genannten Kraftrichtungen ein Zusammenhalt der Personenkabine und der Handelsplattform zumindest jenseits von extremen Fahrsituationen auch ohne Verriegelung sichergestellt sein.

Unter einem Verbindungshub ist vorliegend insbesondere eine Übertragungsschnittstelle für zu übertragende Daten (insbesondere mittels des Daten-Ports) und/oder zu übertragende Energie (insbesondere elektrische Energie mittels des Energie-Ports).

Unter einer Medienisolierung ist vorliegend insbesondere eine Barriere wie beispielsweise ein Gehäuse oder ein Isolierelement zu verstehen, die dazu eingerichtet ist, Schmutz und/oder Wasser von dem Verbindungshub fernzuhalten.

Unter einer Schnittstellenheizung ist vorliegend insbesondere eine Heizeinrichtung der Plattform zu verstehen, die dazu eingerichtet ist, eine Vereisung Verbindung relevante Teile der korrespondierenden Kraftübertragungs-Passform und/oder des Verbindungshubs abzutauen und/oder zu enteisen und/oder reif- oder eisfrei zu halten.

Gemäß einer Ausführung weist eine Kopplungseinrichtung zur Verbindung einer Personenkabine und einer Antriebsplattform insbesondere eine Kabinenschnittstelle gemäß einer Ausführung der Erfindung und eine Plattformschnittstelle gemäß einer Ausführung der Erfindung auf. Die Kopplungseinrichtung weist im gekoppelten Zustand der Kabinenschnittstelle und der Plattformschnittstelle zumindest auf: a) eine korrespondierende Schnittstellengeometrie, sodass insbesondere die die Ports und die Medienisolierungen der Verbindungshubs ineinandergreifen, b) eine korrespondierende Kraftübertragungs-Passform, sodass bei verbundenen Schnittstellen die Personenkabine und die Antriebsplattform in Fahrzeuglängsrichtung, in Fahrzeugquerrichtung und bzgl. einer Rotation um die Fahrzeughochachse zueinander festgelegt sind, c) eine korrespondierende Verriegelung, sodass bei verbundenen Schnittstellen die Personenkabine und die Antriebsplattform in Fahrzeughochrichtung und bzgl. einer Rotation um die Fahrzeuglängsachse und um die Fahrzeugquerachse festgelegt sind.

Vorteilhafte Ausbildungen der verschiedenen Aspekte der Erfindung sind Gegenstand der Unteransprüche. Weitere Merkmale, Vorteile und Anwendungsmöglichkeiten der Erfindung ergeben sich aus der nachfolgenden Beschreibung im Zusammenhang mit den Figuren. Es zeigen, teilweise in stark schematisierter Darstellung,
- Fig. 1: in einer dreidimensionalen Ansicht ein intermodales Personenverkehrssystem nach einer beispielhaften Ausführung der Erfindung mit einem Transitknoten zum Wechseln von Personenkabinen zwischen verschiedenen Antriebsplattformen;
- Fig. 2: in einer schematischen Schnittansicht das intermodale Personenverkehrssystem aus Figur 1;
- Fig. 3: in einer schematischen Schnittansicht ein intermodales Personenverkehrssystem nach einer weiteren beispielhaften Ausführung der Erfindung mit einem Transitknoten, an welchem Personenkabinen von einer ersten straßengebundenen Antriebsplattform auf eine zweite straßengebundene Antriebsplattform überführt werden können;
- Fig. 4a: in einer Seitenansicht eine Personenkabine nach einer ersten, straßengebundenen beispielhaften Ausführung der Erfindung, die mit einer Antriebsplattform nach einer ersten beispielhaften Ausführung der Erfindung verbunden ist;
- Fig. 4b: die Personenkabine aus Fig. 4a verbunden mit einer Antriebsplattform nach einer zweiten, schienengebundenen beispielhaften Ausführung der Erfindung;
- Fig. 5: die in Figur 4a dargestellten Komponenten in verschiedenen Ansichten;
- Fig. 6: in schematischen Ansichten ein Wechsel der Personenkabine von einer ersten Antriebsplattform auf eine zweite Antriebsplattform an einem Transitknoten gemäß Fig. 3;
- Fig. 7: eine Kopplungseinrichtung nach einer beispielhaften Ausführung der Erfindung, bestehend aus einer Kabinenschnittstelle an der Personenkabine von Fig. 4a (schematisch von unten betrachtet dargestellt in Fig. 7a) und einer Plattformschnittstelle an der Antriebsplattform gemäß Fig. 4a (schematisch von oben betrachtet dargestellt in Fig. 7b), jeweils dargestellt in einer schematischen Draufsicht;
- Fig. 8: die Kabinenschnittstelle und die Plattformschnittstelle der Kopplungseinrichtung aus Fig. 7, jeweils dargestellt in einer schematischen Seitenansicht; und
- Fig. 9: Kopplungseinrichtung aus Fig. 7 entlang der Schnittlinie I - I aus Fig. 7a und II - II aus Figur 7b.

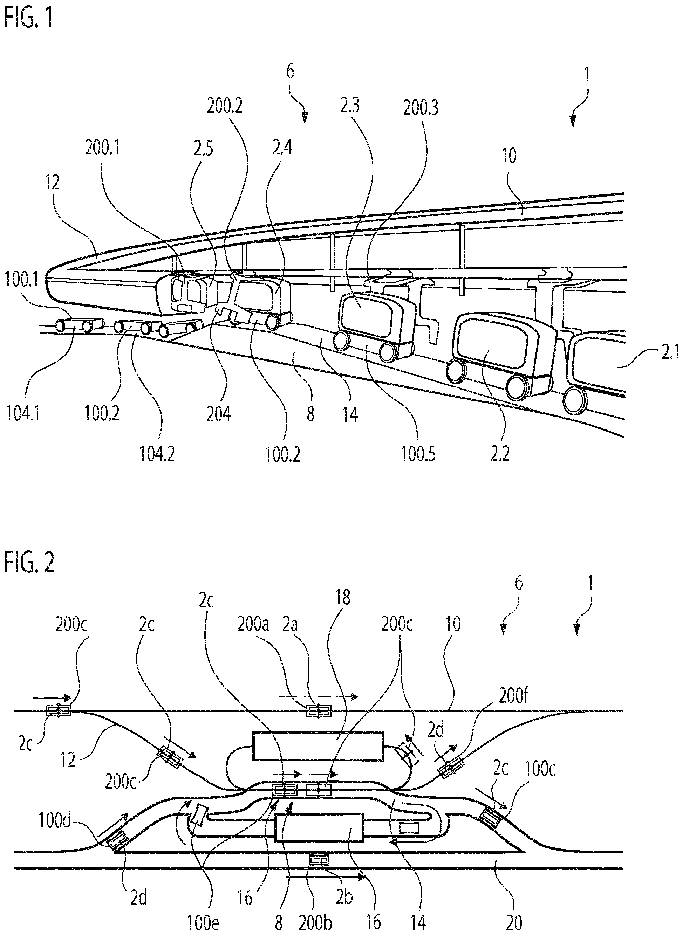

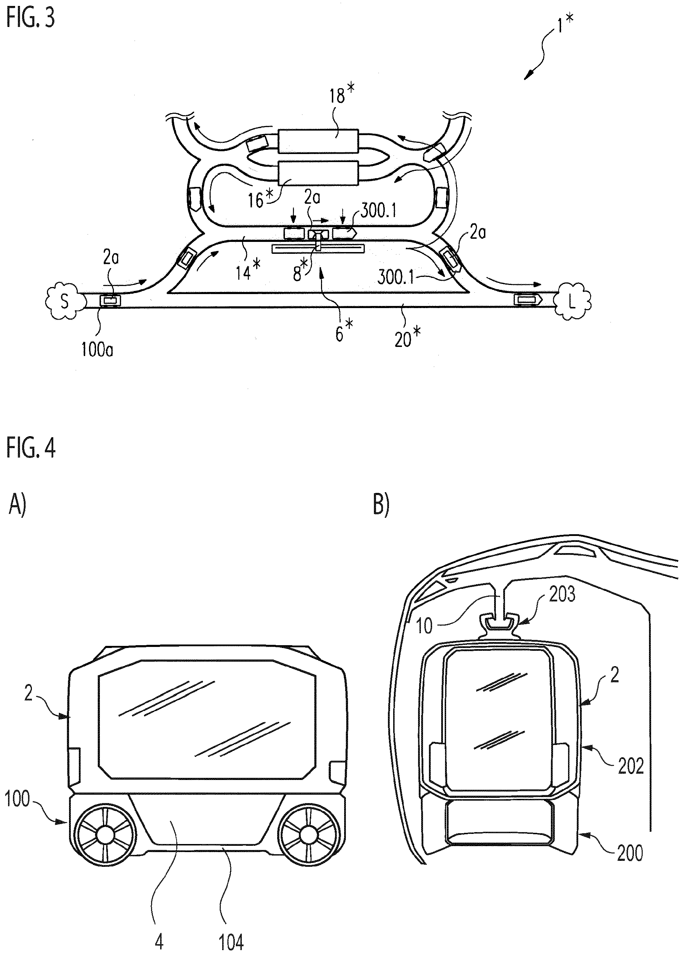

In Figur 1 ist ein intermodales Personenverkehrssystem 1 dargestellt, das eine Vielzahl von Personenkabinen 2 aufweist. Die Personenkabinen 2 weisen jeweils eine in Figur 1 nicht dargestellte Kabinenschnittstelle 4 (vgl. insbesondere Figuren 4a, 5c und 6 bis 9) auf, mittels welcher sie mit unterschiedlichen Antriebsplattformen (zum Beispiel 100, 200 oder 300), d.h. im dargestellten Ausführungsbeispiel mit einer ersten, straßengebundenen Antriebsplattform 100 oder mit einer zweiten schienengebundenen Antriebsplattform 200 verbunden werden können.

Die ersten Antriebsplattformen 100 weisen eine mit der der Kabinenschnittstelle 4 korrespondierende erste Plattformschnittstelle 104 auf, die zweiten Antriebsplattformen 200 weisen eine zweite Plattformschnittstelle 204 auf, die der ersten Plattformschnittstelle 104 zumindest bezüglich der Schnittstelleneigenschaften zur Kabinenschnittstelle 4 im Wesentlichen entspricht.

Das intermodale Personenverkehrssystem 1 weist zusätzlich einen Transitknoten 6 mit einem im Ausführungsbeispiel nur schematisch angedeuteten Plattformtauscher 8 auf. Der Plattformtauscher ist dazu ausgebildet, eine Personenkabine 1, welche an ihrer Kabinenschnittstelle mit der Plattformschnittstelle 104 einer ersten Antriebsplattform 100 verbunden ist, von dieser ersten Antriebsplattform 100 zu trennen und die Personenkabine 1 mit der Plattformschnittstelle 204 einer zweiten Antriebsplattform 200 zu verbinden, oder andersherum, wie in Figur 1 dargestellt.

Im Ausführungsbeispiel ist dazu im Schienensystem zum Betrieb der zweiten Antriebsplattformen 200 neben dem Reisegleis 10 ein Verzögerungs- bzw. Zubringergleis 12 vorgesehen, an welchem die Fahrzeuge bestehend aus der Personenkabine 2 und der zweiten Antriebsplattform 200 abgebremst werden können. Zudem weist ein ansonsten nicht dargestelltes Straßensystem zum Betrieb der ersten Antriebsplattformen 100 eine Zubringerstraße 14 auf. Das Zubringergleis 12 und die Zubringerstraße 14 sind zueinander so geführt, dass Personenkabinen 2 an einer Plattformtauschstelle 16 von der zweiten Antriebsplattform 200 auf eine bereitgestellte erste Antriebsplattform 100 übergeben werden können oder auch andersherum (hier nicht dargestellt).

Der Plattformtauscher 8 des Transitknotens 6 ist im Ausführungsbeispiel sehr einfach ausgebildet: Mittels eines nicht dargestellten Mechanismus wird die Plattformschnittstelle 204 der zweiten Antriebsplattform 200 an der Plattformtauschstelle 16 zu einem Zeitpunkt geöffnet, an welchem unterhalb der Personenkabine 2 (hier 2.4) eine erste Antriebsplattform 100 (hier 100.4) bereitgestellt ist.

Auf diese Weise kann beispielsweise ein Übergang von einer sehr schnellen, schienengebundenen Überland-Verbindung (ähnlich einem Bahn-Fernverkehr) auf eine innerörtliche Straßenverbindung (ähnlich einem lokalen Busverkehr) in einem vollautonomen System ermöglicht werden. Die erste Antriebsplattform 100 kann dazu beispielsweise mit einem Elektroantrieb und einem wiederaufladbaren Batteriepack ausgestattet sein.

In Figur 2 ist das intermodale Personenverkehrssystem 1 aus Figur 1 zur Verdeutlichung nochmals in einer schematischen Schnittansicht dargestellt. Im Detail ist der Transitknoten 6 mit dem Plattformtauscher 8 und der zuführenden Infrastruktur beider Verkehrsmodi dargestellt. In der Figur 2 sind vier Verkehrssituationen dargestellt:
(1) Eine Personenkabine 2a, die auf einer zweiten Antriebsplattform 200a am Transitknoten 6 vorbei schnell im Überland-Reiseverkehr des schienenbasierten Verkehrsmodus verfahren wird; (2) Eine Personenkabine 2b, die auf einer ersten Antriebsplattform 200b am Transitknoten 6 vorbei im innerörtlichen Reiseverkehr verfahren wird; (3) Zu verschiedenen Zeitpunkten eine Personenkabine 2c, die am Transitknoten 6 aus dem schienengebundenen Verkehr 6 ausgekoppelt und in dem straßengebundenen Verkehr eingekoppelt wird; und (4) Zu verschiedenen Zeitpunkten eine Personenkabine 2d, die am Transitknoten 6 aus dem straßengebundenen Verkehrsmodus ausgekoppelt und in den schienengebundenen Verkehrsmodus eingekoppelt wird.

Die Personenkabine 2c ist zunächst auf einer zweiten Antriebsplattform 200c auf dem Reisegleis 10 unterwegs. Sie wird auf das Zubringergleis 12 ausgekoppelt und zu der Plattformaustauschstelle 16 hin abgebremst und dort hin verfahren. An der Plattformaustauschstelle 16 steht eine erste Antriebsplattform 100e bereit, auf die die Kabine 2c mittels des Plattformtausches 8 aufgesetzt wird. Die erste Antriebsplattform 100e wird aus einem ersten Plattformlager 18 bereitgestellt. Die durch die Übergabe frei gewordene zweite Antriebsplattform 200c wird in ein zweites Plattformlager 20 zwischengelagert. Die Personenkabine 2c wird verbunden mit der ersten Antriebsplattform 100e auf der Zubringerstraße 14 beschleunigt und anschließend auf die Reisestraße 20 verfahren. Umgekehrt kann die Personenkabine 2d, die verbunden mit einer ersten Antriebsplattform 100d auf der Zubringerstraße 14 zum Plattformtauscher 8 verfahren wird, an der Plattformtauschstelle 16 auf eine zweite Antriebsplattform 200f umgeladen, auf dem Zubringergleis 12 beschleunigt und in das Reisegleis 10 eingekoppelt werden.

In Figur 3 ist ein Ausschnitt aus einem anderen Transitknoten 6* dargestellt, der einen Verkehrsmodus-Wechsel zwischen einem ersten straßengebundenen Verkehrsmodus und einem zweiten straßengebundenen Verkehrsmodus ermöglicht. Der erste straßengebundene Verkehrsmodus weist erste Antriebsplattformen 100 auf, die mit einem Elektroantrieb für einen Stadtverkehr S vorgesehen sind. Der zweite straßengebundene Verkehrsmodus weist zweite, straßengebundene Antriebsplattformen 300 auf, die mit einem Verbrennungsmotor für einen Überlandverkehr L vorgesehen sind.

Ein solcher Transitknoten 6* kann beispielsweise in einem intermodalen Personenverkehrssystem 1 gemäß der Figuren 1 und 2 zusätzlich vorgesehen sein, wenn die entsprechenden Verkehrsmodi vorgesehen sind. In der Darstellung der Figur 3 ist der Transitknoten 6* aber Bestandteil eines anderen intermodalen Personenverkehrssystems 1*.

Dargestellt ist in Figur 3 eine stadtauswärtige Fahrrichtung einer Reisestraße 20*. In dieser Fahrrichtung kann eine Personenkabine 2a (die zu verschiedenen Zeitpunkten dargestellt ist) auf der ersten Antriebsplattform 100a über eine Zubringerstraße 14* zu einem Plattformtauscher 8* (hier als verfahrbarer Hebe-Greifer ausgebildet) verfahren werden und dort auf eine bereitgestellte zweite Antriebsplattform 300.1 übersetzt werden. Verbunden mit dieser zweiten Antriebsplattform 300.1 kann die Personenkabine 2a beschleunigt und in den Überland-Verkehr eingekoppelt werden. Auch an diesem Transitknoten 8* sind für die unterschiedlichen Antriebsplattformen 100 und 300 unterschiedliche Plattformlager 18* und 20* vorgesehen, aus welchen die angeforderte Plattformart bereitgestellt werden kann.

Im dargestellten Personenverkehrssystem 1* kann ein Übersetzen einer Personenkabine 2 von einem Überlandverkehr in den Stadtverkehr und damit von einer zweiten Antriebsplattform 300 auf eine erste Antriebsplattform 100 analog dem dargestellten Bereich des Transitknotens 6* an einem nicht dargestellten analog arbeitenden Plattformtauscher an einer Zubringerstraße der stadteinwärtigen Fahrrichtung durchgeführt werden.

In den Figuren 4a sind unterschiedliche Fahrzeugkombinationen dargestellt, die sich aus der gleichen Personenkabine 2 in Verbindung mit unterschiedlichen Antriebsplattformen ergeben können. In Figur 4a ist dabei ein Fahrzeugverbund dargestellt, der sich aus der Verbindung der Personenkabine 2 mit einer ersten, straßengebundenen Antriebsplattform 100 ergibt. Dabei ist die Personenkabine 2 an ihrer Kabinenschnittstelle 4 in der Antriebsplattform 100 aufgenommen, insbesondere auf deren Plattformschnittstelle 104 aufgesetzt.

In Figur 4b ist ein (Verbund)-Fahrzeug dargestellt, in welchem die Personenkabine 2 mit einer zweiten, schienengebundenen Antriebsplattform 200 verbunden ist. Nicht dargestellt ist die Aufnahme der Kabinenschnittstelle 4 in der Plattformschnittstelle 204 der zweiten Antriebsplattform. Die zweite Antriebsplattform 200 weist anders als die erste Antriebsplattform 100 keine Räder auf. Stattdessen weist sie eine Tragekonstruktion 202 auf, mit welcher eine Schienenführung 203 zur Führung an einem Reisegleis 10 mit dem Unterbau der zweiten Antriebsplattform 200 - und damit mit der Plattformschnittstelle 204 - verbunden ist. Auf diese Weise kann die Personenkabine 2 entlang einer Hängeschienenbahn verfahren werden.

Beispielsweise kann die Schienenführung 203 ein Starttorpaket eines elektromagnetischen Linearantriebs aufweisen, wobei dann die Reiseschiene 10 die zugehörigen Aktoren aufweist. Alternativ kann auch vorgesehen sein, dass die Schienenführung 203 mit einem Schienenantrieb der Antriebsplattform 200 verbunden ist. Zusätzlich oder alternativ zu dem hier beschriebenen Verkehrsmodus kann auch ein Verkehrsmodus vorgesehen sein, bei welchem die Grundstruktur der Antriebsplattform mit Radwellen derjenigen aus Figur 4a entspricht, wobei die Räder allerdings als Schienenräder zum Betrieb beispielsweise auf klassischen Normalspur-Bahnen ausgebildet sind.

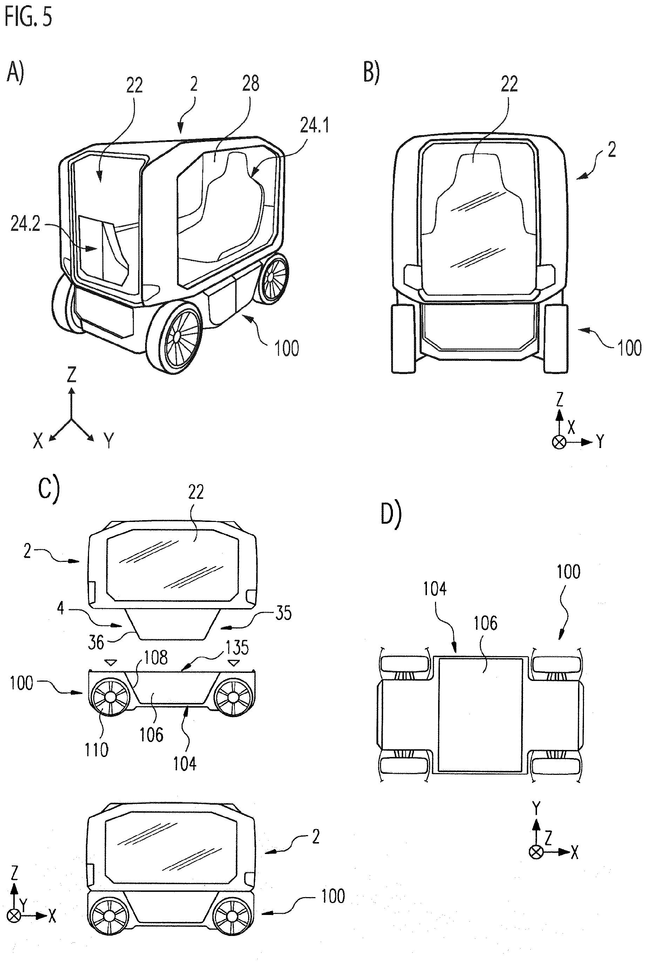

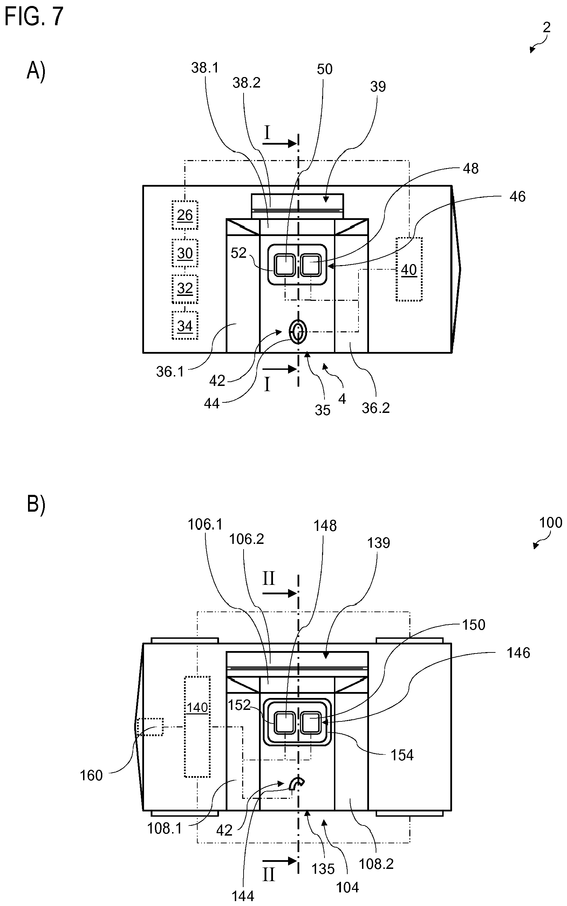

In der Figur 5 ist das (Verbund)-Fahrzeug aus einer Personenkabine und einer ersten Antriebsplattform 100 in verschiedenen Perspektiven dargestellt. Insbesondere in Figur 5c sind die Personenkabine 2 einerseits und die erste Antriebsplattform 100 andererseits sowohl in einem getrennten als auch in einem verbundenen Zustand dargestellt. Den Figuren 5a, b und c ist zudem zu entnehmen, dass die Personenkabine 2 einen Fahrgastraum 22 zum Aufnehmen wenigstens eines Fahrgasts aufweist. In diesem Fahrgastraum 22 kann beispielsweise für jeden vorgesehenen Passagier ein Sitz 24 verbaut sein. Zudem weist der Fahrgastraum im Ausführungsbeispiel eine Fahrgastbedienschnittstelle 26 (vgl. Figur 7) zum Absetzen eines Notrufs und/oder zum Treffen von Verkehrsentscheidungen und/oder zum Öffnen einer Fahrgastraumtüre 28 auf. Die Personenkabine 2 weist zudem eine geeignete Klimatisierungsinfrastruktur 30, ein ggf. mit der Bedienschnittstelle 26 verbundenes Infotainmentsystem und/oder einen Mobilfunkverstärker 34 zur Bereitstellung einer Telefon- und/oder Internetverbindung für den/die Fahrgäste.

Der Figur 5d ist eine beispielhafte Schnittstellengeometrie 106 der Plattformschnittstelle 104 der ersten Antriebsplattform 100 zu entnehmen. Insbesondere aus Figur 5c ist sowohl eine beispielhafte Schnittstellengeometrie 34 der Kabinenschnittstelle 4 als auch eine beispielhafte Schnittstellengeometrie 106 der Plattformschnittstelle 104 der Antriebsplattform 100 zu entnehmen. An beiden Schnittstellen 4 bzw. 104 sind Querwände 36 bzw. 108 der jeweiligen Schnittstellengeometrie 34 bzw. 106 erkenntlich. Der Schnittstellengeometrie 106 der Antriebsplattform 100 ist zudem eine Längswand 110 zu entnehmen. Dadurch, dass die Querwände 36 einerseits und 108 andererseits zueinander korrespondierend ausgebildet sind (ebenso wie die Längswände 110 und nicht dargestellte Längswände der Personenkabine 2), können die Kabinenschnittstelle 4 und die Plattformschnittstelle 104 sich im verbundenen Zustand aneinander abstützen, wenn beispielsweise Fahrtkräfte aufzunehmen sind.

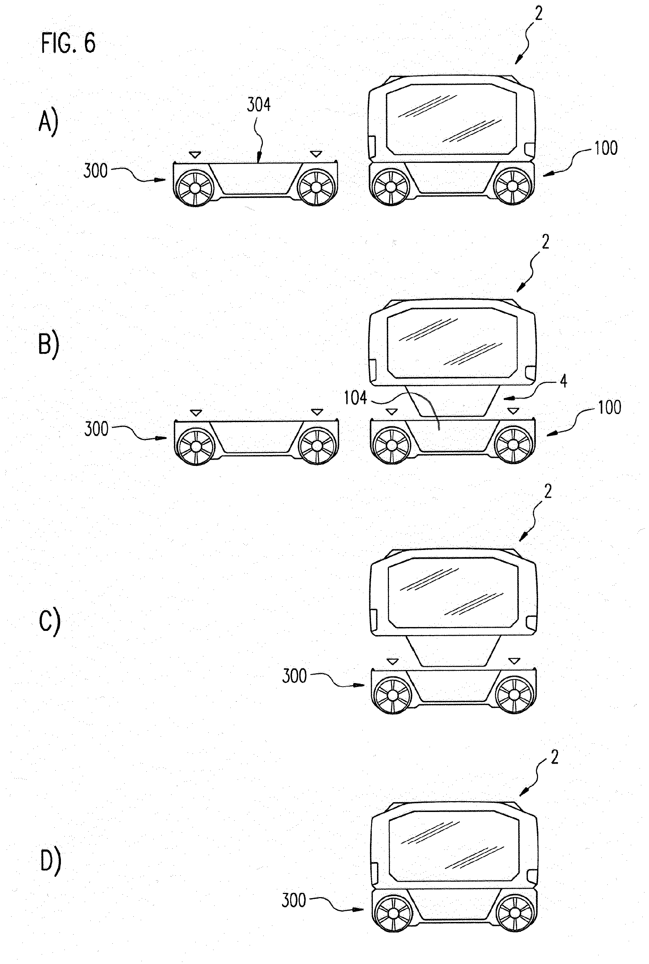

In Figur 6 ist in mehreren Schritten a bis d schematisch dargestellt, wie eine Personenkabine 2 mittels eines nicht dargestellten Plattformtauschers von einer ersten, straßengebundenen Antriebsplattform 100 mit Elektroantrieb auf eine zweite, straßengebundene Antriebsplattform 300 mit einem Verbrennungsmotor übergesetzt werden kann. Aus der Darstellung wird klar, dass sich die Plattformschnittstellen 104 der Antriebsplattformen 100 und 304 der Antriebsplattform 300 zumindest hinsichtlich der Schnittstelleneigenschaften zumindest im Wesentlichen entsprechen müssen, um beide die Kabinenschnittstelle 4 aufnehmen zu können.

Der dargestellte Wechsel der Antriebsplattform kann in dieser Weise beispielsweise in dem in Figur 3 dargestellten intermodalen Personenverkehrssystem 1* durchgeführt werden. In diesem Fall kommt dann zum Umheben der Personenkabine 2 der in Figur 3 schematisch dargestellte Plattformtauscher 8* zum Einsatz.

In Figur 7 ist eine schematische untere Ansicht einer Personenkabine 2 dargestellt. In Figur 7b ist eine schematische obere Ansicht einer ersten Antriebsplattform 100 dargestellt. Damit besser erkennbar ist, dass die Kabinenschnittstelle 4 und die Plattformschnittstelle 104 miteinander korrespondierend ausgebildet sind, sind die Personenkabine 2 und die Antriebsplattform 100 mit unterschiedlichen Frontalausrichtungen - dargestellt durch die dreieckigen Spitzen - dargestellt. Die Personenkabine aus Figur 7a weist neben der Plattformschnittstelle 4 ein Steuergerät 40 auf, welches mit geeigneten Leitungen zur Daten-/Energieübertragung mit der Infrastruktur 26, 30, 32 und/oder 34 des Fahrgastraums 22 der Personenkabine 2 verbunden ist.

Die Kabinenschnittstelle 4 weist eine beispielhafte Schnittstellengeometrie 34 mit Querwänden 36.1 und 36.2 sowie Längswänden 38.1 und 38.2 auf. Die Gesamtheit der verschiedenen Wände 36 und 38 trägt zur Definition einer Kraftübertragungspassform 39 der Kabinenschnittstelle 4 bei oder definiert diese vollständig. An der Schnittstellengeometrie 4 ist der kabinenseitige Teil einer Verriegelung 42 zur sicher festgelegten Verbindung der Personenkabine 2 und der Antriebsplattform 100, eine Verriegelungsausnehmung 44, angeordnet. Die Schnittstellengeometrie 34 weist einen kabinenseitigen Verbindungshub 46 mit einem Datenport 48 zur Übertragung von Daten wie beispielsweise Steuerungsdaten zwischen der Personenkabine 2 und der Antriebsplattform 100 auf. Zudem weist der Verbindungshub 46 einen Energieport 50 zur Übertragung insbesondere elektrischer Energie zwischen der Antriebsplattform 100 und der Personenkabine 2 auf. Beide Ports 48 und 50 sind mittels einer Medienisolierung 52 zumindest im verbundenen Zustand von schädlichen Medien wie Wasser und/oder Schmutz abgeschirmt.

Die Steuereinheit 40 ist auch jeweils mit einer Datenleitung mit dem Datenport und dem Energieport 50 zur Daten- und/oder Energieübertragung verbunden. Alle Leitungen in Figur 7 sind mit doppelt gepunkteten Strichlinien dargestellt.

In Figur 7b ist eine erste, straßengebundene Antriebsplattform 100 mit einem nicht dargestellten elektrischen Antrieb gezeigt, der auf wenigstens zwei der Räder 110 wirkt. Die Antriebsplattform 100 weist eine Steuereinheit 140 auf, welche mittels einer Daten- und/oder Energieübertragungsleitung mit einem Sensorenpaket 150 verbunden ist, das im Zusammenspiel mit der Steuereinheit 140 die Antriebsplattform 100 zu einem vollautonomen Verfahren im öffentlichen Straßenverkehr befähigt.

Die Antriebsplattform 100 weist eine zu der Kabinenschnittstelle 4 der Personenkabine 2 korrespondierende Plattformschnittstelle 104 mit einer Schnittstellengeometrie 104 auf. In analoger Weise zur Kabinenschnittstelle 4 ergibt sich eine Kraftübertragungspassform 139 der Plattformschnittstelle 104 ganz oder teilweise aus den Querwänden 108 und/oder den Längswänden 106.

An der Plattformschnittstelle 104 ist ein Riegel 144 der Verriegelung 42 angeordnet, welcher zu der Verriegelungsausnehmung 44 der Personenkabine 2 korrespondierend ausgebildet ist, sodass eine sichere Verriegelung erreicht werden kann.

Auch in der Schnittstellengeometrie 106 der Plattformschnittstelle 104 ist ein Verbindungshub 146 mit einem Datenport 148 und einem Energieport 150 angeordnet, wobei die Ports 148 und 150 eine Medienisolierung 152 aufweisen. Die Ports 148 und 150 sind mit geeigneten Daten und/oder Energieübertragungsleitungen mit der Steuereinheit 140 verbunden.

Zudem weist die Plattformschnittstelle (104) eine Schnittstellenheizung (154) auf, die - beispielsweise mit Heizdrähten - ausgebildet ist, eine Vereisung der Plattformschnittstelle oder einzelner Komponenten abzutauen und/oder die Schnittstellengeometrie (135) eisfrei zu halten.

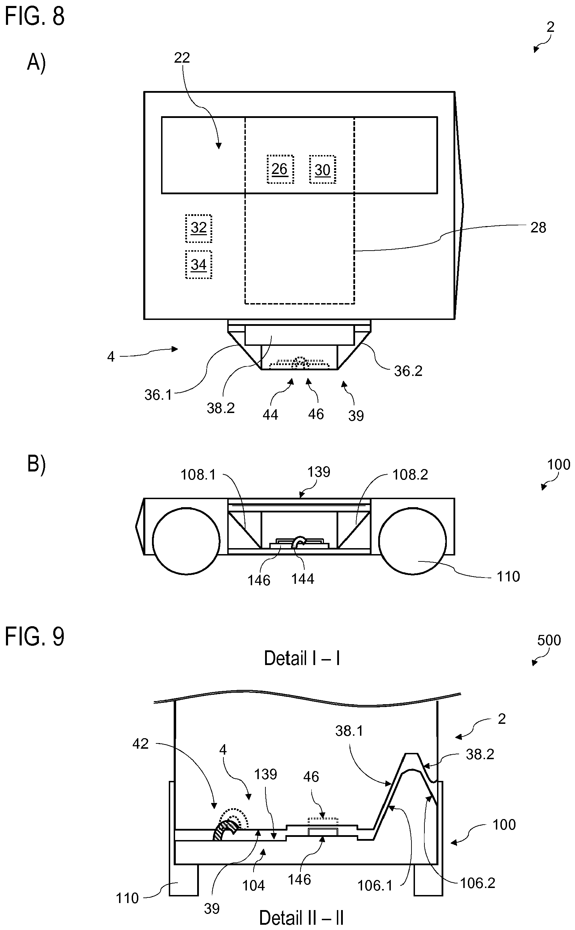

In Figur 8a ist die Personenkabine 2 aus Figur 7a in einer schematischen Seitenansicht dargestellt. Die Türe 28 ist gestrichelt dargestellt, weil sie in der Darstellung auf der dem Betrachter abgewandten Seite angeordnet ist. Schematisch ist der Fahrgastraum 22 zu erkennen. Gestrichelt sind die Bedienschnittstelle 26, die Türaktuatorik 30 und die weitere Infrastruktur 32 und 34 dargestellt. Die Plattformschnittstelle 4 ist mit den Querwänden 36 und der Längswand 38.2 erkennbar. Der Verbindungshub 46 und die Verriegelungsausnehmung 44 sind aufgrund ihrer internen Position nur gestrichelt dargestellt.

In Figur 8b ist die Antriebsplattform 100 aus Figur 7b mit ihrer Kraftübertragungspassform 139, die zur Kraftübertragungspassform 39 der Personenkabine 2 korrespondiert dargestellt. Der Riegel 144 ist ebenso erkennbar wie der Verbindungshub 146.

In Figur 9 ist dargestellt, wie die Kabinenschnittstelle 4 aus den Figuren 7 und 8 und die Plattformschnittstelle 104 aus den Figuren 7 und 8 zu einer Kopplungseinrichtung 500 verbunden werden können, wobei im gekoppelten Zustand - der hier nicht dargestellt ist - durch die Kopplung die Personenkabine 2 und die Antriebsplattform 100 fest miteinander verbunden sind. Die Darstellung der Figur 9 ist eine Kombination aus dem in Figur 7a eingezeichneten Schnitt I-I und dem in Figur 7b eingezeichneten Schnitt II-II. Erkennbar ist, dass die Kraftübertragungspassform 39 der Kabinenschnittstelle 4 und die Kraftübertragungspassform 139 der Plattformschnittstelle 104 derart korrespondierend zueinander ausgebildet sind, dass sie bei weiterem Zusammenführen als dargestellt passgenau ineinandergreifen, und u.a. mittels der dargestellten Längswände 38 bzw. 106 zuverlässig und formschlüssig miteinander verbunden sind, wenn die Verriegelung 42 nach vollständigem Ineinanderlegen der Schnittstellen geschlossen ist. Die Verriegelung 42 muss dann kaum mehr eine Kraftübertragungsfunktion, sondern lediglich die Sicherung des Zusammenhalts bei unvorhergesehenen Krafteinwirkungen - beispielsweise bei einem Unfall - übernehmen. Wenn die Schnittstellen 4 und 104 vollständig zusammengeführt sind, greifen auch 46 und 146 ineinander, wodurch die gewünschte Verbindung zwischen der Personenkabine 2 und der Antriebsplattform 100 sichergestellt werden kann.

### BEZUGSZEICHENLISTE

- 1: intermodales Personenverkehrssystem
- 2: Personenkabine
- 4: Kabinenschnittstelle
- 6: Transitknoten
- 8: Plattformtauscher
- 10: Reisegleis
- 12: Zubringergleis
- 14: Zubringerstraße
- 16: Plattformtauschstelle
- 18: erstes Plattformlager
- 20: zweites Plattformlager
- 22: Fahrgastraum
- 24: Sitz
- 26: Fahrgast-Bedienschnittstelle
- 28: Fahrgastraumtüre
- 30: Klimatisierungsinfrastruktur
- 32: weitere Fahrgastraum-Infrastruktur
- 34: Mobilfunkschnittstelle
- 35: Schnittstellengeometrie
- 36: Querwand
- 38: Längswand
- 39: Kraftübertragungs-Passform
- 40: Steuereinheit
- 42: Verriegelung
- 44: Verriegelungsausnehmung
- 46: Verbindungshub
- 48: Datenport
- 50: Energieport
- 52: Medienisolierung
- 100: erste Antriebsplattform (straßengebunden, Elektromaschinen)
- 104: erste Plattformschnittstelle
- 106: Längswand
- 108: Querwand
- 110: Rad
- 135: Schnittstellengeometrie
- 139: Kraftübertragungs-Passform
- 140: Steuereinheit
- 144: Riegel
- 146: Verbindungshub
- 148: Datenport
- 150: Energieport
- 152: Medienisolierung
- 154: Schnittstellenheizung
- 160: Sensorenpaket

- 200: zweite Antriebsplattform (schienengebunden)
- 204: zweite Plattformschnittstelle

- 300: zweite Antriebsplattform (straßengebunden, Verbrennungsmotor)
- 304: zweite Plattformschnittstelle

- 500: Kopplungseinrichtung

- S: Stadtverkehr
- L: Überlandverkehr

- x: Längsrichtung
- y: Querrichtung
- z: Hochrichtung

## Patentansprüche

1. **Intermodales Personenverkehrssystem** (1), **aufweisend:**
- wenigstens eine Personenkabine (2) zur Aufnahme wenigstens eines Fahrgasts, wobei die Personenkabine eine Kabinenschnittstelle (4) aufweist,
- wenigstens eine erste Antriebsplattform (100) mit einem ersten Verkehrsmodus, aufweisend eine mit der Kabinenschnittstelle (4) korrespondierende erste Plattformschnittstelle (104),
- wenigstens eine zweite Antriebsplattform (200, 300) mit einem zweiten Verkehrsmodus, aufweisend eine zweite Plattformschnittstelle (204, 304), die der ersten Plattformschnittstelle (104) zumindest im Wesentlichen entspricht, und
- wenigstens einen Transitknoten (6) mit einem Plattformtauscher (8), der dazu ausgebildet ist, eine Personenkabine (2), welche an ihrer Kabinenschnittstelle (4) mit der Plattformschnittstelle (104) einer ersten Antriebsplattform (100) verbunden ist, von dieser ersten Antriebsplattform (100) zu trennen und die Personenkabine (4) mit der Plattformschnittstelle (204, 304) einer zweiten Antriebsplattform (200, 300) zu verbinden.

2. Intermodales Personenverkehrssystem (1) gemäß Anspruch 1, **wobei** wenigstens ein Transitknoten (6) einen Moduswechsler (12; 14) aufweist, der ausgebildet ist, ein Fahrzeug (2; 100, 200, 300) aus einem Verkehrsfluss im ersten Verkehrsmodus zu entkoppeln und ein, insbesondere das, Fahrzeug (2; 100, 200, 300) in einen Verkehrsfluss im zweiten Verkehrsmodus einzukoppeln.

3. Intermodales Personenverkehrssystem (1) gemäß einem der vorherigen Ansprüche, **wobei** die Antriebsplattformen (100, 200, 300) für einen vollautonomen Fahrbetrieb eingerichtet und ausgebildet sind.

4. Intermodales Personenverkehrssystem (1) gemäß einem der vorherigen Ansprüche, **aufweisend** eine Vielzahl von Personenkabinen (2), jeweils eine Vielzahl von Antriebsplattformen (100, 200, 300) mit unterschiedlichen Verkehrsmodi und mehrere Transitknoten (6).

5. Intermodales Personenverkehrssystem (1) gemäß einem der vorherigen Ansprüche, **wobei** wenigstens eine Antriebsplattform (100, 300) mit einem straßenbasierten Verkehrsmodus und wenigstens eine Antriebsplattform (200) mit einem schienenbasierten Verkehrsmodus vorgesehen ist.

6. **Personenkabine** (2) zur Verwendung in einem intermodalen Personenverkehrssystem (1) gemäß einem der vorherigen Ansprüche, **aufweisend:**
- einen Fahrgastraum (22) zum Aufnehmen wenigstens eines Fahrgastes, und
- eine Kabinenschnittstelle (4) zur Verbindung mit einer Plattformschnittstelle (104, 204, 304) einer Antriebsplattform (100, 200, 300).

7. Personenkabine (2) gemäß Anspruch 6, **wobei** der Fahrgastraum (22) eine Fahrgast-Bedienschnittstelle (26) zum Absetzen eines Notrufs und/oder zum Treffen von Verkehrsentscheidungen und/oder zum Öffnen einer Fahrgastraumtüre (28) und/oder zum Bedienen von Komfortfunktionen (30, 32, 34) aufweist.

8. Personenkabine (1) gemäß einem der Ansprüche 6 oder 7, **wobei** der Fahrgastraum (22) wenigstens eine Komfortfunktion (30, 32, 34) wie Klimatisierung/Heizung, Infotainment oder eine Mobilfunkverbindung aufweist.

9. **Antriebsplattform** (100, 200, 300) zur Verwendung in einem intermodalen Personenverkehrssystem (1) gemäß einem der vorherigen Ansprüche 1 bis 5, **aufweisend**
- einen Antrieb und ein Fahrwerk (110; 202, 203) zum Transport einer Personenkabine (2) mittels eines bestimmten Verkehrsmodus, und
- eine Plattformschnittstelle (104, 204, 304) zur Verbindung mit einer Kabinenschnittstelle (4) einer Personenkabine (2).

10. Antriebsplattform (100, 200, 300) gemäß Anspruch 9, deren Verkehrsmodus **gekennzeichnet ist durch:**
- Straßenverkehr auf Basis eines Antriebs mit einer Verbrennungskraftmaschine zum Antrieb von Straßenrädern (110) und einem Brennstofftank, und/oder
- Straßenverkehr auf Basis eines Antriebs mit wenigstens einer elektrischen Maschine zum Antrieb von Straßenrädern und einem elektrischen Energiespeicher, und/oder
- Straßenverkehr auf Basis eines Antriebs mit wenigstens einer elektrischen Maschine zum Antrieb von Straßenrädern und einem elektrischen Energiespeicher sowie einem kraftstoffgetriebenen Range Extender, und/oder
- Schienenverkehr auf Basis eines Antriebs mit wenigstens einer elektrischen Maschine zum Antrieb von Schienenrädern, und/oder
- Schienenverkehr auf Basis eines Magnetschwebeverkehr zum Antrieb von Linearstatoren, und/oder
- Schienenverkehr auf Basis eines Zugseil-Antriebs, und/oder
- Seilbahnverkehr auf Basis eines Zugseil-Antriebs, und/oder
- Magnetschwebeverkehr auf Basis eines magnetelektrischen Schwebeantriebs.

11. Antriebsplattform (100, 200, 300) gemäß Anspruch 9 oder 10, **aufweisend** eine Steuereinheit (140) und ein Sensorenpaket (160), wobei die Steuereinheit (140) im Zusammenwirken mit dem Sensorenpaket (160), dem Antrieb und dem Fahrwerk (110; 202, 203) eingerichtet ist, die Antriebsplattform (100, 200, 300) in ihrem Verkehrsmodus vollautonom zu bewegen.

12. **Kabinenschnittstelle** (4) zur Verwendung an einer Personenkabine (2) gemäß einem der Ansprüche 6 bis 8, **wobei** die Kabinenschnittstelle (4) wenigstens einen größeren Teil einer Unterseite der Personenkabine (2) einnimmt.

13. Kabinenschnittstelle (4) gemäß Anspruch 12, **aufweisend**
- eine Kabinen-Schnittstellengeometrie (35) mit einer Kraftübertragungs-Passform (39), wobei die Kraftübertragungs-Passform (39) wenigstens eine, insbesondere zwei voneinander beabstandete, Querwände (36) und wenigstens zwei voneinander beanstandete Längswände (38) aufweist, und/oder
- eine an der Schnittstellengeometrie (35) angeordnete Verriegelung (42), die vorzugsweise wenigstens eine Verriegelungsausnehmung (44) aufweist, und/oder
- einen an der Schnittstellengeometrie (35) angeordneten Verbindungshub (46) mit wenigstens einem Daten-Port (48), wenigstens einem Energie-Port (50) und einer Medienisolierung (52), die den Verbindungshub (46) und/oder wenigstens einen der Ports (48, 50) gegenüber der restlichen Schnittstellengeometrie abgrenzt.

14. **Plattformschnittstelle** (104, 204, 304) zur Verwendung an einer Antriebsplattform (100, 200, 300) gemäß einem der Ansprüche 9 bis 11, **wobei** die Plattformschnittstelle (104, 204, 304) wenigstens einen größeren Teil einer nach oben ausgerichteten Aufnahmeseite, insbesondere einer Oberseite, der jeweiligen Antriebsplattform (100, 200, 300) einnimmt.

15. Plattformschnittstelle (104, 204, 304) gemäß Anspruch 14, **aufweisend**
- eine Plattform-Schnittstellengeometrie (135) mit einer Kraftübertragungs-Passform (139), wobei die Kraftübertragungs-Passform (139) wenigstens eine, insbesondere zwei voneinander beabstandete, Querwände (108) und wenigstens zwei voneinander beanstandete Längswände (106) aufweist, und/oder
- eine an der Schnittstellengeometrie (135) angeordnete Verriegelung (42), die vorzugsweise wenigstens einen Riegel (144) aufweist, und/oder
- einen an der Schnittstellengeometrie (135) angeordneten Verbindungshub (146) mit wenigstens einem Daten-Port (148), wenigstens einem Energie-Port (150) und einer Medienisolierung, die den Verbindungshub (146) und/oder wenigstens einen der Ports (148, 150) gegenüber der restlichen Schnittstellengeometrie (135) abgrenzt, und/oder
- eine Schnittstellenheizung (154), die ausgebildet ist, eine Vereisung der Plattformschnittstelle (104) oder einzelner Komponenten abzutauen.

16. **Kopplungseinrichtung** (500) zur Verbindung einer Personenkabine (2) und einer Antriebsplattform (100, 200, 300), aufweisend eine Kabinenschnittstelle (4) gemäß einem der Ansprüche 12 oder 13 und eine Plattformschnittstelle (104, 204, 304) gemäß einem der Ansprüche 14 oder 15, im gekoppelten Zustand **aufweisend:**
- eine korrespondierende Schnittstellengeometrie (35, 135), sodass insbesondere die Verbindungshubs (46, 146) mit den Ports (48, 148; 50, 150) und die Medienisolierungen (52, 152) der Verbindungshubs (46, 146) ineinandergreifen,
- eine korrespondierende Kraftübertragungs-Passform (39, 139), sodass bei verbundenen Schnittstellen (4; 104, 204, 304) die Personenkabine (2) und die Antriebsplattform (100, 200, 300) in Fahrzeuglängsrichtung (x), in Fahrzeugquerrichtung (y) und bzgl. einer Rotation um die Fahrzeughochachse (z) zueinander festgelegt sind,
- eine korrespondierende Verriegelung (42; 44, 144), sodass bei verbundenen Schnittstellen (4; 104, 204, 304) die Personenkabine (2) und die Antriebsplattform (100, 200, 300) in Fahrzeughochrichtung (z) und bzgl. einer Rotation um die Fahrzeuglängsachse (x) und um die Fahrzeugquerachse (y) festgelegt sind.
